# EUROPEAN PATENT APPLICATION

(11) **EP 4 841 685 A1**
(43) Date of publication of application: **18.11.2026**
(21) Application number: 26177805.4
(22) Date of filing: 11.05.2026
(51) Int. Cl.: H01M 4/04, H01M 4/13, H01M 4/62, H01M 10/0525, H01M 50/534, H01M 50/595

(54) **ELECTRODE SHEET AND APPLICATIONS THEREOF**

(30) Priority: 13.05.2025 CN 202510612805
(71) Applicant: AESC Japan Ltd., Yokohama-shi, Kanagawa 220-0012 (JP)
(72) Inventor: JIANG, Zhida, Jiangyin City, Wuxi City, 214443 (CN); LIU, Feiyang, Jiangyin City, Wuxi City, 214443 (CN); HU, Fei, Jiangyin City, Wuxi City, 214443 (CN)
(74) Representative: Becker, Eberhard

(57) **Abstract**

Disclosed are an electrode sheet and applications thereof, wherein the electrode sheet includes a current collector, an active material layer, and a reinforcing layer. At least one side of the current collector includes an active-material-layer-coated region and an active-material-layer-uncoated region adjacent to each other along a first direction. The active material layer is coated in the active-material-layer-coated region. The reinforcing layer is coated in at least a portion of the active-material-layer-uncoated region. The active material layer includes a first binder. The content of the first binder in the active material layer is A%. The thickness of the current collector is h µm, satisfying 1.3≤h/A≤55. Through the electrode sheet and its application of the present disclosure, it is possible to increase the energy density of the battery while reducing wrinkling and folding of the current collector, thereby improving the safety performance of the battery.

## Description

### BACKGROUND

### Technical Field

The present disclosure relates to the technical field of secondary batteries, and specifically relates to an electrode sheet and applications thereof.

### Related Art

By virtue of high energy density, rechargeability, and characteristics of safety and environmental protection, lithium-ion batteries are commonly utilized in the fields of new energy vehicles, consumer electronics, and energy storage systems. In lithium-ion batteries, increasing the proportion of an active material may enhance energy density. Within negative electrode sheets, the use of polyacrylic acid and derivatives thereof may reduce content of a binder and thereby increase the proportion of the active material; however, significant stress arises during the drying process, which readily causes wrinkling of a current collector. Furthermore, when the proportion of the active material is increased, the tabs are, after die-cutting, more prone to defects such as bending, wrinkling, and fold-over, which may even adversely affect the charge-discharge performance and safety performance of the finished battery cells.

### SUMMARY

The present disclosure discloses an electrode sheet and applications thereof. A reinforcing layer may achieve an enhanced supporting effect, enable a reduction in the content of a first binder, and, while increasing an energy density of a battery, prevent the occurrence of phenomena such as wrinkling and folding in uncoated regions of an active material layer.

In order to solve the above technical problems, the present disclosure is achieved through the following technical solutions.

The present disclosure provides an electrode sheet, includes a current collector, an active material layer, and a reinforcing layer.

At least one side of the current collector includes an active-material-layer-coated region and an active-material-layer-uncoated region adjacent to each other along a first direction.

The active-material-layer-coated region is coated with the active material layer; the reinforcing layer is coated in at least a portion of the active-material-layer-uncoated region.

The active material layer includes a first binder, a content of the first binder in the active material layer is A%, a thickness of the current collector is h µm, satisfying 1.3<h/A<55.

In an embodiment of the present disclosure, based on a total mass of the active material layer, the content of the first binder in the active material layer is 0.1% to 4%.

In an embodiment of the present disclosure, the active material layer further includes an active material and a conductive agent, and the first binder includes at least one of polyacrylic acid and derivatives thereof, a polymerized styrene butadiene rubber, or carboxymethylcellulose sodium.

In an embodiment of the present disclosure, a ratio of a thickness of the reinforcing layer to the thickness of the current collector is 1 to 6.

The thickness of the current collector is 4 µm to 5.5 µm.

In an embodiment of the present disclosure, along the first direction, there is a predetermined spacing G mm between the active material layer and the reinforcing layer, satisfying 22≤W1/G≤400.

In an embodiment of the present disclosure, along the first direction, a width of the active-material-layer-uncoated region is W1 mm, a width of the reinforcing layer is W2 mm, satisfying 2.5≤W1/W2≤7.5.

In an embodiment of the present disclosure, the reinforcing layer includes ceramic particles, a second binder, and a color developer, and a mass ratio of the ceramic particles, the second binder, and the color developer is (10-20):(75-90):(0.5-5); the second binder is an aqueous binder.

The second binder includes at least one of the polyacrylic acid, the polymerized styrene butadiene rubber, polyvinyl alcohol, polyacrylamide, methylcellulose and salts thereof, chitosan and salts thereof, and alginic acid and salts thereof.

The color developer includes at least one of carbon black, chrome oxide green, cobalt green, cobalt blue, iron blue, cadmium red, carbon black, or iron oxide red.

In an embodiment of the present disclosure, a grayscale value of the reinforcing layer is 0 to 110, and the electrode sheet is a negative electrode sheet.

A battery is further provided by the present disclosure, including:
a housing having an upper opening;
an electrode assembly disposed in the housing and a lid assembly sealing the upper opening. The electrode assembly is formed by winding or stacking a positive electrode sheet, a separator, and a negative electrode sheet. The negative electrode sheet adopts the electrode sheet described above. Along the first direction, the electrode assembly includes a main body and the active-material-layer-uncoated region. The active-material-layer-uncoated region includes a bending portion and a connecting portion. The connecting portion is fixedly connected to the lid assembly, and the bending portion is connected between the main body and the connecting portion. The reinforcing layer covers at least a partial region of the bending portion.

In an embodiment of the present disclosure, the electrode assembly is covered with a first adhesive tape. The first adhesive tape is disposed on a side of the active-material-layer-uncoated region facing away from the lid assembly. The first adhesive tape includes a first adhesive region, a second adhesive region, and a non-adhesive region located between the first adhesive region and the second adhesive region. The first adhesive region covers the main body, the second adhesive region covers the connecting portion. In a thickness direction of the electrode assembly, an orthographic projection of the reinforcing layer is completely located within the non-adhesive region.

In an embodiment of the present disclosure, the present disclosure further provides an electronic device, including the battery described above.

In summary, the present disclosure provides the electrode sheet and applications thereof. By controlling, within a predetermined range, the ratio of the thickness of the current collector to the content of the first binder in the active material layer, the content of the first binder may be reduced. By further providing the reinforcing layer, defects such as wrinkling and folding in the active-material-layer-uncoated region are avoided while improving the energy density of the battery. Moreover, when assembling the battery using the electrode sheet, because the active-material-layer-uncoated region undergoes bending, the problem of inward buckling of the active-material-layer-uncoated region may also be avoided, thereby preventing short circuits and other associated failures caused by such inward buckling.

### BRIEF DESCRIPTION OF THE DRAWINGS

In order to more clearly illustrate the technical solutions of the embodiments of the present disclosure, the drawings required for describing the embodiments will be briefly introduced below. Clearly, the drawings in the following description are merely some embodiments of the present disclosure, and for those of ordinary skill in the art, other drawings may also be obtained based on these drawings without creative effort.
FIG. 1 is a schematic view of an electrode sheet in an embodiment.
FIG. 2 is a cross-sectional view of an electrode sheet taken along a direction A-A of FIG. 1.
FIG. 3 is a schematic view of a tab on an electrode sheet in an embodiment.
FIG. 4 is a schematic view of a tab and a reinforcing rib on an electrode sheet in an embodiment.
FIG. 5 is a schematic view of a tab on an electrode sheet in another embodiment.
FIG. 6 is a schematic view of a tab and a reinforcing rib on an electrode sheet in another embodiment.
FIG. 7 is a schematic view of a battery in an embodiment.
FIG. 8 is a schematic view of an electrode assembly in an embodiment.
FIG. 9 is a schematic view of an electrode assembly in another embodiment.
FIG. 10 is a schematic view of a positive electrode sheet in an embodiment.
FIG. 11 is a schematic view of a positive tab on a positive electrode sheet in an embodiment.
FIG. 12 is a schematic view of a positive tab on a positive electrode sheet in another embodiment.
FIG. 13 is a schematic view of a partial electrode assembly in an embodiment.

### DESCRIPTION OF THE EMBODIMENTS

The embodiments of the present disclosure are described below through specific examples, and those skilled in the art may readily understand other advantages and effects of the present disclosure from the contents disclosed in this specification. The present disclosure may also be implemented or applied through other different specific embodiments, and various details in this specification may also be modified or changed in various ways based on different viewpoints and applications without departing from the spirit of the present disclosure.

It should be understood that the structures, proportions, sizes, and the like illustrated in the drawings attached to this specification are only used to match the contents disclosed in the specification for the understanding and reading of those skilled in the art, and are not intended to limit the conditions under which the present solution may be implemented, and therefore have no substantial technical significance. Any modification of structures, change of proportional relationships, or adjustment of sizes, without affecting the effects that may be produced and the objectives that may be achieved by the present solution, should still fall within the scope that may be covered by the technical contents disclosed in the present solution. Meanwhile, terms such as "upper," "lower," "left," "right," "middle," "below," "beneath," "first," "second," and "one" cited in this specification are also only for the convenience of clear description, and are not intended to limit the scope within which the present solution may be implemented. Changes or adjustments in their relative relationships, without substantially changing the technical contents, shall also be regarded as the scope within which the present solution may be implemented.

The technical solutions of the present disclosure are further described in detail below in conjunction with the embodiments and the accompanying drawings. Clearly, the described embodiments are only a part of the embodiments of the present disclosure, rather than all of the embodiments. Based on the embodiments of the present disclosure, all other embodiments obtained by those of ordinary skill in the art without creative work shall fall within the scope of protection of the present disclosure.

As requirements for battery energy density and the like increase, replacing carboxymethylcellulose sodium and polymerized styrene butadiene rubber with polyacrylic acid (PAA) and derivatives thereof may reduce the binder content in electrode sheets, increase the proportion of an active material, and thereby improve the energy density of the battery. However, PAA is brittle and induces high stress during the drying process, which readily causes wrinkling of the current collector. In addition, the content of PAA in the active material layer affects wrinkling of the current collector; if a thickness of the current collector is further reduced, wrinkling is more likely to occur. Moreover, to accommodate high-capacity cells, the number of tab layers is increased; during laser welding to an adapter sheet, because multiple layers of tabs are provided, the tabs located in outer layers must be bent, thereby increasing a current conduction path length and resulting in a greater width of an active-material-layer-uncoated region on the current collector. Accordingly, by disposing a reinforcing layer in the active-material-layer-uncoated region on the current collector, wrinkling of the current collector may be reduced, thereby enhancing the safety performance of the battery while ensuring compliance with requirements for energy density, fast charging, and the like.

The present disclosure provides an electronic device. The electronic device includes at least one battery, the battery being configured to supply electrical energy. The electronic device may be, for example, a vehicle, a mobile phone, a portable device, a notebook computer, a ship, an aerospace vehicle, an electric toy, or an electric tool, and the like. In an embodiment of the present disclosure, the vehicle is, for example, a new energy vehicle, which may be a pure electric vehicle, a hybrid electric vehicle, or a range-extended vehicle, and the like. The aerospace vehicle includes, for example, an airplane, a rocket, a space shuttle, and a spacecraft, and the like. The electric toy includes stationary or mobile electric toys, for example, game consoles, electric car toys, electric ship toys, and electric airplane toys, and the like. The electric tool includes metal-cutting power tools, grinding power tools, assembly power tools, and railway power tools, for example, electric drills, electric grinders, electric wrenches, electric screwdrivers, rotary hammers, impact drills, concrete vibrators, and electric planers, and the like.

The present disclosure further provides a battery, which may be applied to the above-mentioned electronic device, and the battery includes an electrode sheet. In some embodiments, the electrode sheet includes a current collector, and at least one side of the current collector includes an active-material-layer-coated region and an active-material-layer-uncoated region adjacent to each other along a first direction, as well as an active material layer coated in the active-material-layer-coated region. Along a second direction, the reinforcing layer is coated in at least a portion of the active-material-layer-uncoated region, and the second direction is perpendicular to the first direction. The electrode sheet is, for example, a negative electrode sheet.

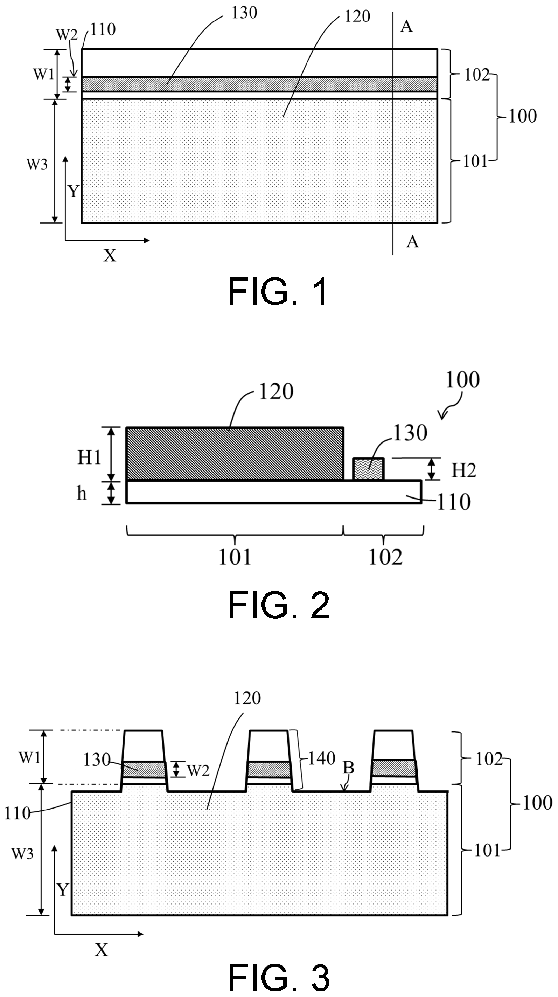

Referring to FIG. 1 and FIG. 2, in an embodiment of the present disclosure, an electrode sheet 100 includes a current collector 110, and at least a surface of the current collector 110 includes an active-material-layer-coated region 101 and an active-material-layer-uncoated region 102 adjacent to each other along a first direction Y. An active material layer 120 is coated in the active-material-layer-coated region 101, and along a second direction X, a reinforcing layer 130 is coated in at least a portion of the active-material-layer-uncoated region 102. Moreover, along the second direction X, an extension length of the reinforcing layer 130 is equal to an extension length of the active material layer 120, and the second direction X is perpendicular to the first direction Y. The active material layer 120 includes a first binder, and the first binder includes at least one of polyacrylic acid and derivatives thereof, polymerized styrene butadiene rubber (SBR), carboxymethylcellulose sodium (CMC-Na), and the like. A content of the first binder in the active material layer is, for example, A%, and a thickness of the current collector 110 is, for example, h µm, satisfying 1.3<h/A<55. In a specific embodiment of the present disclosure, the thickness h of the current collector 110 is, for example, 4 µm to 5.5 µm, and based on a total mass of the active material layer 120, the content of the first binder in the active material layer is, for example, 0.1% to 4%. When polyacrylic acid and derivatives thereof are used as the binder, as the content of the first binder increases, the risk of wrinkling occurring at an interface between the active material layer and the active-material-layer-uncoated region increases. Controlling a ratio of the thickness the current collector to the content of the first binder in the active material layer within a set range may reduce the content of the first binder and increase the content of the active material. By setting the reinforcing layer, on the basis of improving the energy density of the battery, wrinkling and folding of the active-material-layer-uncoated region may be avoided. At the same time, when the electrode sheet is assembled into a battery, since the active-material-layer-uncoated region undergoes bending, the problem of inward buckling in the active-material-layer-uncoated region may also be avoided, thereby avoiding short circuits and other related failures caused by inward buckling.

Referring to FIG. 1 and FIG. 2, in an embodiment of the present disclosure, the current collector 110 is, for example, a negative electrode current collector, and the current collector 110 is, for example, a copper foil, and the active material layer 120 is, for example, a negative electrode active material layer. The active material layer 120 further includes, for example, an active material and a conductive agent, and the like. The active material is, for example, selected from any one or a combination of at least two of soft carbon, hard carbon, artificial graphite, silicon, silicon oxide compounds, silicon carbide compounds, or lithium titanate, and the like. The conductive agent is, for example, selected from any one or more of conductive carbon black (Super-P, SP), acetylene black, carbon nanotubes, and graphene, and the like. The active material layer 120 may further include a thickener, and the thickener is, for example, selected from carboxymethylcellulose sodium, and the like. The active material layer 120 disposed on the current collector 110 has a uniform thickness, thereby improving the uniformity of charging and discharging of the battery. The present disclosure does not limit a mass ratio of the active material, the first binder, the thickener, and the conductive agent, and the selection is made according to preparation requirements, and the first binder content in the active material layer 120 is controlled to be, for example, 0.1% to 4%.

Referring to FIG. 1 and FIG. 2, in an embodiment of the present disclosure, the reinforcing layer 130 includes, for example, ceramic particles, a second binder, a color developer, and the like. The ceramic particles include, for example, at least one of boehmite, aluminum oxide, titanium dioxide, zirconium dioxide, zinc oxide, barium sulfate, boron nitride, aluminum nitride, or magnesium nitride, and the like. The second binder is, for example, an aqueous binder, and further includes, for example, at least one of polyacrylic acid (PAA), polymerized styrene butadiene rubber (SBR), polyvinyl alcohol (PVA), polyacrylamide (PAM), methylcellulose and salts thereof, chitosan and salts thereof, alginic acid and salts thereof, and the like. The color developer includes, for example, at least one of carbon black, chromium oxide green, cobalt green, cobalt blue, iron blue, cadmium red, carbon black, or iron oxide red, and the like. By setting the color developer in the reinforcing layer 130, a grayscale value of the reinforcing layer 130 is, for example, 0 to 110, that is, a color difference between the reinforcing layer 130 and the current collector 110 is increased, and the grayscale value of the reinforcing layer is less than a grayscale value of the current collector. During a die-cutting process of forming the tab, it is convenient for charge-coupled device detection (CCD) to identify the size and position of the reinforcing layer 130, and the reinforcing layer 130 is able to absorb laser energy, reduce reflection and scattering of the laser and the like, make the laser energy more concentrated, thereby reducing the die-cutting power, reducing energy consumption, and making a cutting edge less prone to burrs, thereby reducing the problem of short circuits caused by burrs. By selecting the second binder as an aqueous binder, when preparing the reinforcing layer 130, the negative electrode sheet production line may not require organic gas recovery equipment. The ceramic particles may take into account the support of the reinforcing layer 130, thereby improving the design of a width of the active-material-layer-uncoated region 102, allowing a larger width of the active-material-layer-uncoated region 102 to be obtained, and at the same time, improving the insulation of the reinforcing layer 130 to avoid leakage.

Referring to FIG. 1 and FIG. 2, in an embodiment of the present disclosure, a mass ratio of ceramic particles, the second binder, and the color developer in the reinforcing layer 130 is, for example, (10-20):(75-90):(0.5-5). By employing a high content of the second binder, the adhesion between the reinforcing layer 130 and the current collector 110 may be improved, thereby preventing the reinforcing layer 130 from peeling during the subsequent tab bending process. In an embodiment of the present disclosure, during the tab-bending process, a peel strength between the reinforcing layer 130 and the current collector 110 is greater than 300 N/m.

Referring to FIG. 2, in an embodiment of the present disclosure, when forming the active material layer 120 and the reinforcing layer 130, the active material, the first binder, the thickener, and the conductive agent are dispersed in water according to a mass ratio to obtain a negative electrode slurry. The ceramic particles, the second binder, and the color developer are dispersed in water according to a mass ratio to obtain a reinforcing layer slurry. During the coating process, the negative electrode slurry and the reinforcing layer slurry are synchronously coated on the current collector 110 and dried to obtain the active material layer 120 and the reinforcing layer 130. An areal density of the active material layer 120 and thicknesses of the active material layer 120 and the reinforcing layer 130 may be controlled by at least increasing a slurry flow rate and a slurry solid content of the equipment, and the like.

Referring to FIG. 1 and FIG. 2, in an embodiment of the present disclosure, the active material layer 120 and the reinforcing layer 130 are disposed on at least one side of the current collector 110. In another embodiment of the present disclosure, the active material layer 120 is disposed on both sides of the current collector 110, and along the first direction Y, the reinforcing layer 130 spaced apart from the active material layer 120 is disposed on both sides of the current collector 110. That is, the current collector 110 has two surfaces opposite to each other in its own thickness direction. The active material layer 120 and the reinforcing layer 130 are simultaneously disposed at intervals on one surface of the current collector 110; or the active material layer 120 is simultaneously disposed on both surfaces of the current collector 110, and the reinforcing layer 130 is disposed on one surface of the current collector 110; or the active material layer 120 and the reinforcing layer 130 are simultaneously disposed at intervals on both surfaces of the current collector 110.

Referring to FIG. 1 and FIG. 2, in an embodiment of the present disclosure, the thickness of the active material layer 120 on one side of the current collector is H1 µm, satisfying 3≤H1/h≤35. When the thickness of the active material layer 120 is excessive or the thickness of the current collector is insufficient, the active-material-layer-uncoated region is prone to wrinkling and folding during die cutting and winding. On the basis of setting the reinforcing layer, by controlling a ratio of the thickness of the active material layer to the thickness of the current collector within a set range, the wrinkling and folding of the active-material-layer-uncoated region may be improved, thereby improving the safety performance of the battery. The thickness of the reinforcing layer 130 on one side of current collector is H2 µm, satisfying 1<H2/h<6. Because a thinner current collector is more prone to wrinkling during die-cutting and winding-particularly thin stock of less than 5.5 µm-by selecting appropriate thicknesses for the active material layer and the current collector and coordinating the design of the reinforcing layer, wrinkling of the current collector may be avoided, the strength of the active-material-layer-uncoated region may be maintained, and wave-like edges caused by laser cutting at an interface between the active material layer and the active-material-layer-uncoated region may be avoided. At the same time, the bottom support of the active-material-layer-uncoated region is improved so that, upon bending, inward buckling is avoided.

Referring to FIG. 1, in an embodiment of the present disclosure, along the first direction Y, the width of the active-material-layer-uncoated region 102 is W1 mm, and a width of the reinforcing layer 130 is W2 mm, satisfying 2.5≤W1/W2≤7.5. In a specific embodiment of the present disclosure, the width W2 of the reinforcing layer 130 is, for example, 3 mm to 12 mm. When the width of the active-material-layer-uncoated region 102 is large, the risk of folding and wrinkling of the active-material-layer-uncoated region 102 during die-cutting and winding is high. By controlling a ratio of the width of the active-material-layer-uncoated region 102 to the width of the reinforcing layer 130, when the width of the active-material-layer-uncoated region 102 is large, a supporting effect may be achieved to avoid folding and wrinkling. When the width of the active-material-layer-uncoated region 102 is small, it is also possible to avoid the width of the reinforcing layer 130 occupying a welding area of the active-material-layer-uncoated region 102 used for connecting to an external terminal, thereby affecting the welding of the active-material-layer-uncoated region 102.

Referring to FIG. 1, in an embodiment of the present disclosure, along the first direction Y, there is a predetermined spacing between the active material layer 120 and the reinforcing layer 130, denoted as G mm, satisfying 22≤W1/G≤400. In a specific embodiment of the present disclosure, the predetermined spacing is 0.1 mm to 1.1 mm. By controlling a ratio of W1/G, within an appropriate range of the width of the active-material-layer-uncoated region 102 and the predetermined spacing, this setting prevents the predetermined spacing from being excessive, which would reduce the effect of the reinforcing layer and may result in insufficient welding area in the active-material-layer-uncoated region 102 used for connecting to the external terminal. By taking into account both the width of the active-material-layer-uncoated region 102 and the predetermined spacing, it is possible to prevent the predetermined spacing from being insufficient, which would cause the reinforcing layer 130 and the active material layer 120 to intermingle with each other, leading to edge bulging and other conditions, thereby making the boundary between the reinforcing layer 130 and the active material layer 120 clear, improving battery performance, and reducing safety hazards.

Referring to FIG. 1, in an embodiment of the present disclosure, along the first direction Y, a width of the active material layer 120 is W3 mm, satisfying 3≤W3/W1≤11. In a specific embodiment of the present disclosure, the width W1 of the active-material-layer-uncoated region 102 is, for example, 30 mm to 40 mm. By controlling a ratio of the width of the active material layer 120 to the width of the active-material-layer-uncoated region 102, on the basis of setting the reinforcing layer, the widths of the active material layer 120 and the active-material-layer-uncoated region 102 may be balanced, thereby facilitating the bending of the uncoated region for electrical connection to the terminal, and avoiding folding and wrinkling, while also balancing the gravimetric energy density of the battery.

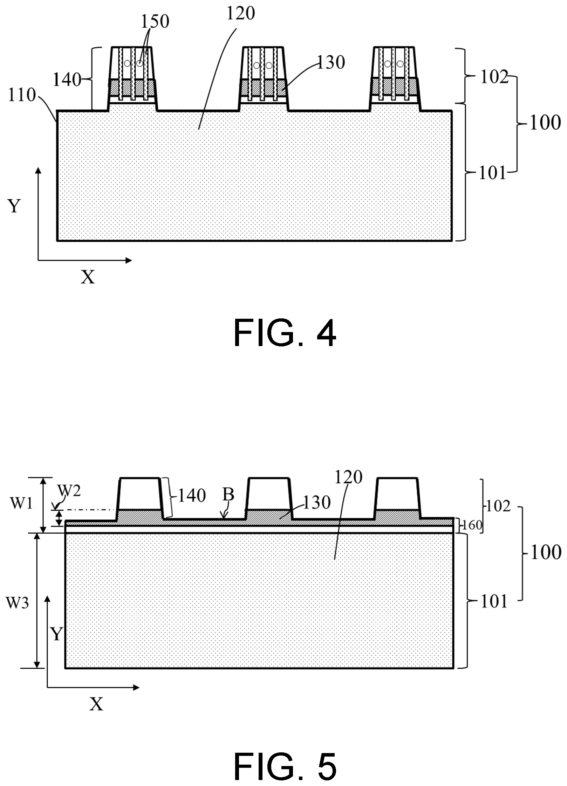

Referring to FIG. 3 and FIG. 4, in an embodiment of the present disclosure, the electrode sheet 100 further includes a tab 140, wherein a portion of the active material layer 120 covers at least a portion of a surface of the tab 140 along the first direction Y. In this case, a height of the tab 140 includes dimensions of the active material layer that may extend to both the front and back sides of the tab 140.

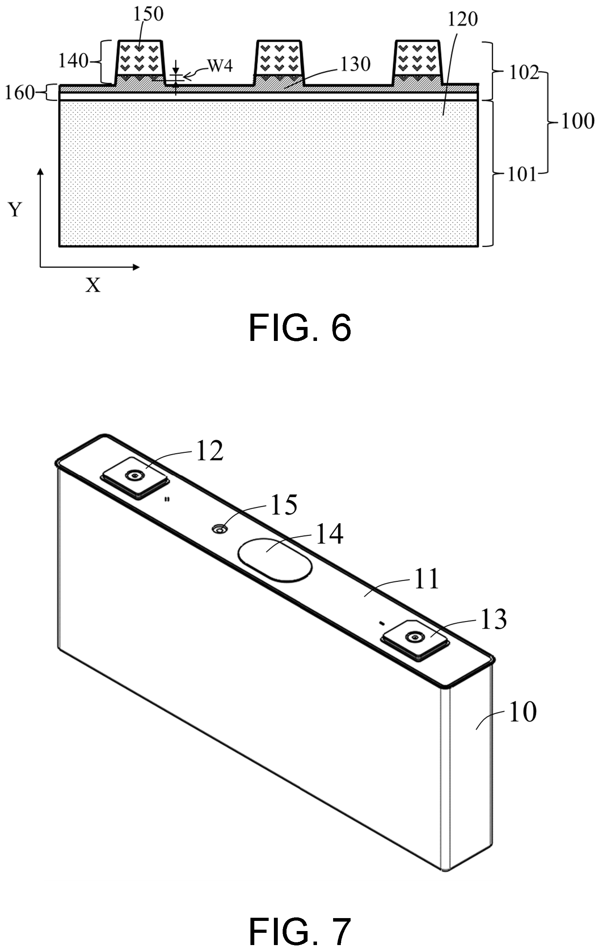

Referring to FIG. 5 and FIG. 6, in another embodiment of the present disclosure, the electrode sheet 100 further includes the tab 140. A transition region 160 is disposed between the tab 140 and the active-material-layer-coated region 101, and the reinforcing layer 130 is located on a portion of the transition region 160 and a portion of the surface of the tab 140. In this case, the height of the tab includes the dimensions of the reinforcing layer located on a portion of the tab 140.

Referring to FIG. 3 and FIG. 5, in an embodiment of the present disclosure, after forming the active material layer 120 and the reinforcing layer 130, the tab 140 is obtained by die-cutting a portion of the active-material-layer-uncoated region 102 or die-cutting the active-material-layer-uncoated region 102 and a portion of the active-material-layer-coated region 101, wherein a die-cutting stop position is recorded as a shoulder B of the tab 140, and the tab 140 extends from the shoulder B to a side of the active-material-layer-uncoated region 102 away from the active material layer 120. By setting the transition region 160, the laser energy for die-cutting may be reduced, thereby reducing energy consumption. That is to say, compared to die-cutting to a region partially provided with the active material layer, the laser energy is lower, the laser power is reduced, the foil exposure phenomenon is reduced, the energy density and cycle performance of the battery are improved, and the safety performance is improved.

Referring to FIG. 3 to FIG. 6, in an embodiment of the present disclosure, the tab 140 further includes a plurality of reinforcing ribs 150, and the reinforcing ribs 150 are formed by stamping the tab 140. The reinforcing ribs 150 are disposed on the tab 140 in at least one shape such as dot-shaped, strip-shaped, wave-shaped, or broken-line-shaped, and along the first direction and/or the second direction, every two adjacent reinforcing ribs 150 are spaced apart from each other. When the reinforcing ribs 150 are distributed in a strip shape, the reinforcing ribs 150 are similar to a plurality of parallel elongated strips. A ratio of a width (W4 mm) of a maximum overlap position of the reinforcing rib 150 and the reinforcing layer 130 to a width (W2 mm) of the reinforcing layer 130 is 0.1 to 1, wherein a maximum distance from the reinforcing rib 150 located on the reinforcing layer 130 in a direction away from the first direction to a lateral side of the reinforcing layer 130 away from the active material layer 120 is defined as W4. When W4/W2 is 1, it indicates that the reinforcing rib 150 at least coincides with a lateral side of the reinforcing layer 130 close to the active material layer 120, or a portion of the reinforcing ribs 150 are located within the predetermined spacing between the reinforcing layer 130 and the active material layer 120. In a specific embodiment of the present disclosure, after the tab 140 is formed, the reinforcing ribs 150 are obtained, for example, by stamping the current collector 110 in the region of the tab 140. In other embodiments, the reinforcing ribs 150 may also be made through other methods. For example, the reinforcing ribs 150 are separately formed and then fixed on the current collector 110. By controlling a ratio of W4/W2 within an appropriate range, a strength of the reinforcing layer may be improved, tab wrinkling may be reduced, thereby further increasing the width of the active-material-layer-uncoated region 102, so as to adapt to more layers of tabs and reduce a direct current resistance (DCR) of the battery.

Referring to FIG. 7, in an embodiment of the present disclosure, the battery further includes a housing 10 having an upper opening, an electrode assembly disposed within the housing 10, and a lid assembly 11 that seals the upper opening. The present disclosure does not limit the type and shape of the battery. The battery may be, for example, a primary battery or a secondary battery. The secondary battery may be, for example, a pouch battery, a columnar battery, or a prismatic battery, and may also be, for example, a sodium-ion secondary battery or a lithium-ion secondary battery. In this embodiment, a lithium-ion secondary battery is used as an example for illustration.

Referring to FIG. 7 to FIG. 9, in an embodiment of the present disclosure, when the secondary battery is, for example, a prismatic battery, the prismatic battery includes, for example, the housing 10, the lid assembly 11, and an electrode assembly 20 disposed within the housing 10, and the tab of the electrode assembly 20 is electrically connected to the terminal on the housing 10. The shape of the housing 10 matches the shape of the electrode assembly 20, and the material of the housing 10 is, for example, an aluminum housing, a steel housing, or a flexible housing. The housing 10 is an accommodating cavity having an upper opening for accommodating the electrode assembly 20. Specifically, after the electrode assembly 20 is placed into the housing 10 through the upper opening, the housing 10 is sealed using the lid assembly 11. The lid assembly 11 is provided with a first terminal 12, a second terminal 13, an explosion-protection valve 14, a liquid-injection hole 15, and the like. An electrolyte is injected through the liquid-injection hole 15, and then the liquid-injection hole 15 is sealed. The first terminal 12 and the second terminal 13 have opposite polarities, and the first terminal 12 and the second terminal 13 are respectively a positive electrode or a negative electrode. The present disclosure does not limit the specific polarity types corresponding to the first terminal 12 and the second terminal 13. The first terminal 12 is electrically connected to the tab of the same polarity on the electrode assembly 20, and the second terminal 13 is electrically connected to the tab of the same polarity on the electrode assembly 20. In this embodiment, the positions of the first terminal 12 and the second terminal 13 are not limited; they may be located at the same end of the housing or at both ends of the housing, and are specifically arranged according to the position of the tab on the electrode assembly 20 or design requirements.

Referring to FIG. 7, in an embodiment of the present disclosure, when the first terminal 12 and the second terminal 13 are disposed at one end of the housing, the explosion-protection valve 14 and the liquid-injection hole 15 are disposed between the first terminal 12 and the second terminal 13. The explosion-protection valve 14 is disposed, for example, at a middle position between the first terminal 12 and the second terminal 13, and has a preset distance from the first terminal 12 and the second terminal 13, respectively. The liquid-injection hole 15 is disposed between the explosion-protection valve 14 and the first terminal 12, or between the explosion-protection valve 14 and the second terminal 13, that is, the explosion-protection valve 14, the liquid-injection hole 15, the first terminal 12, and the second terminal 13 are spaced apart from each other. The explosion-protection valve 14 may enable the ventilation function during normal operation of the cell, allowing airflow inside and outside the cell to circulate while particulate matter cannot circulate. When thermal runaway occurs in the cell and the pressure difference between the inside and outside of the cell reaches the explosion-proof preset value, the explosion-protection valve opens, and both gas and solid may be discharged from the inside of the cell to the outside of the cell through the explosion-protection valve, thereby improving the safety performance of the cell.

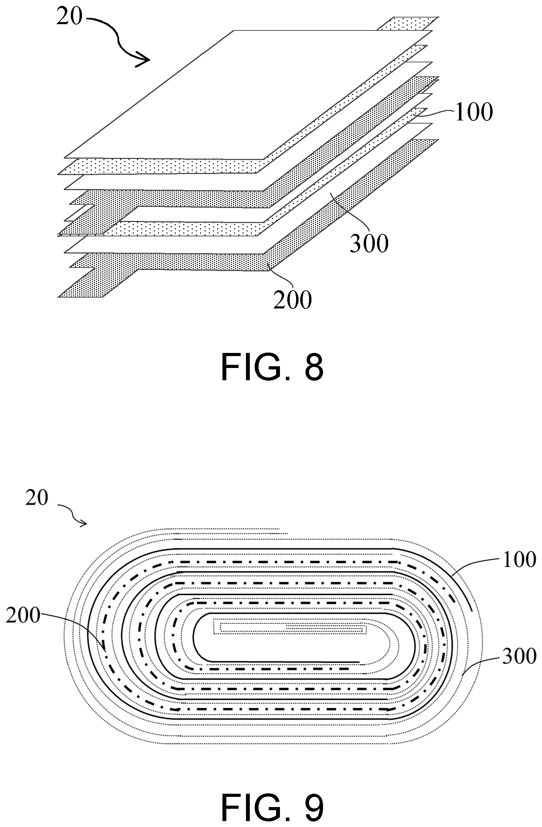

Referring to FIG. 8 to FIG. 9, in an embodiment of the present disclosure, the electrode assembly 20 includes a negative electrode sheet, a positive electrode sheet 200, and a separator 300. The negative electrode sheet is selected from the above-mentioned electrode sheet 100. The separator 300 is disposed between the positive electrode sheet 200 and the negative electrode sheet to prevent the positive electrode sheet 200 and the negative electrode sheet from contacting each other and causing safety issues. The electrolyte (not shown in the figure) is filled between the negative electrode sheet, the positive electrode sheet 200, and the separator 300, as well as between the electrode assembly 20 and the housing, to conduct ions between the positive and negative electrode sheets. The electrolyte is selected from any applicable electrolyte for lithium-ion batteries. The present disclosure does not specifically limit the method of stacking the positive and negative electrode sheets, and the specific method is selected according to manufacturing requirements.

In an embodiment of the present disclosure, the electrolyte includes, for example, an organic solvent and a lithium salt. The organic solvent is selected from any one or more of ethylene carbonate (EC), propylene carbonate (PC), ethyl acetate (EA), ethyl methyl carbonate (EMC), dimethyl carbonate (DMC), or diethyl carbonate (DEC). The lithium salt is selected from, for example, any one or more of lithium bis(fluorosulfonyl)imide (LiFSi), lithium difluorophosphate (LiPO₂F₂), lithium hexafluorophosphate (LiPF₆), or lithium tetrafluoroborate (LiBF₄). In an embodiment of the present disclosure, the lithium salt is selected from, for example, lithium hexafluorophosphate, and the organic solvent is selected from, for example, a mixture of ethylene carbonate, ethyl methyl carbonate, diethyl carbonate, and propylene carbonate. The ethylene carbonate, ethyl methyl carbonate, diethyl carbonate, and propylene carbonate are mixed, for example, at a volume ratio of 1:1:1:1. In an argon atmosphere glove box with a water content of less than 10 ppm, the fully dried LiPF₆ is dissolved in the mixed organic solvent, and after mixing uniformly, the electrolyte is obtained, wherein a concentration of LiPF₆ is, for example, 1 mol/L.

Referring to FIG. 8 to FIG. 9, in an embodiment of the present disclosure, the electrode sheet 100 and the positive electrode sheet 200 are made into the electrode assembly 20 by, for example, a winding or stacking process, and the stacking process is performed through, for example, laminated stacking or Z-type stacking, which is not specifically limited in the present disclosure. The separator 300 is, for example, a polyethylene film (PE), a polypropylene film (PP), a glass fiber membrane, a polyethylene film, or a composite membrane, and the present disclosure does not limit a thickness of the separator 300, provided that the thickness satisfies the requirements of use.

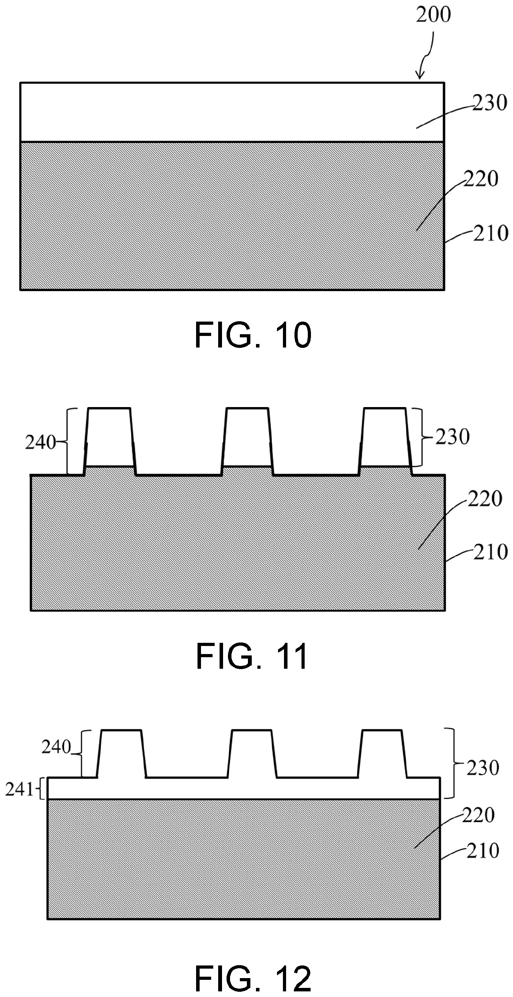

Referring to FIG. 10, in an embodiment of the present disclosure, the positive electrode sheet 200 includes a positive electrode current collector 210 and a positive electrode active material layer 220 coated on at least one surface of the positive electrode current collector 210. That is, the positive electrode current collector 210 has two surfaces opposite to each other in its own thickness direction, and the positive electrode active material layer 220 may be disposed on either one or both of the two surfaces of the positive electrode current collector 210. The positive electrode current collector 210 may be selected as an aluminum foil current collector, and a thickness of the aluminum foil current collector is, for example, 5 µm to 20 µm. Further, the thickness of the aluminum foil current collector is, for example, 10 µm to 15 µm. The positive electrode current collector 210 may also be selected as a composite current collector, which includes a polymer matrix and aluminum layers located on the upper and lower surfaces of the polymer matrix. The polymer matrix may be selected from polyethylene terephthalate, polypropylene, polyimide, polystyrene, or polyamide, etc.

Referring to FIG. 10, in an embodiment of the present disclosure, on the positive electrode current collector 210, a region coated with the positive electrode active material layer 220 is defined as an electrode sheet region, and a region of the positive electrode current collector 210 not coated with the positive electrode active material layer 220 is defined as a positive tab region 230, which is used to form a positive tab, and the electrode sheet region and the positive tab region 230 are adjacent to each other. The positive electrode active material layer 220 includes a positive electrode active material, a positive electrode conductive agent, and a positive electrode binder, wherein the positive electrode active material may be selected from the group consisting of lithium nickel cobalt manganese oxide, lithium nickel manganese oxide, lithium titanate, lithium nickel cobalt manganese aluminum oxide, lithium iron phosphate, and lithium manganese iron phosphate, and combinations thereof. By way of example, the positive electrode conductive agent is selected from the group consisting of conductive carbon black, acetylene black, metal nanopowders, graphene, carbon nanotubes, and carbon nanofibers, or a composition including two or more of the foregoing mixed in any proportion. The positive electrode binder is selected from the group consisting of polyvinylidene fluoride (PVDF), a copolymer of vinylidene fluoride and hexafluoropropylene (PVDF-HFP), polytetrafluoroethylene (PTFE), and mixtures of two or more of the forgoing. The present disclosure does not limit the thickness of the positive electrode active material layer 220, which may be selected in accordance with battery design requirements.

Referring to FIG. 11 and FIG. 12, in an embodiment of the present disclosure, the positive electrode sheet 200 includes a plurality of positive tabs 240, and a portion of the positive electrode active material layer 220 covers at least a portion of a surface of the positive tabs 240; or a connection region 241 is disposed between the positive tabs 240 and the positive electrode active material layer 220. The connection region 241 is located within the positive tab region 230, that is, the positive electrode active material layer 220 is not disposed on the connection region 241, and the positive electrode active material layer 220 does not cover the positive tabs 240.

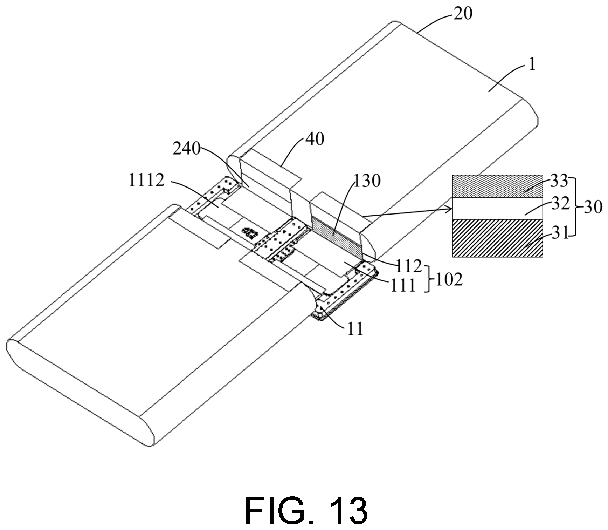

Referring to FIG. 4, FIG. 6, and FIG. 13, in an embodiment of the present disclosure, the electrode sheet 100, the positive electrode sheet 200, and the separator 300 are made into the electrode assembly 20 by, for example, a winding or stacking process, and the electrode assembly 20 includes a main body 1 and the active-material-layer-uncoated region 102 and the positive tabs 240 located at one end of the main body 1, and the active-material-layer-uncoated region 102 is utilized to form tabs 140 to serve as negative tabs. The main body 1 is a portion formed as a laminate with the shoulder B of the tab. Two electrode assemblies 20 are arranged opposite to each other in the housing 10, and each electrode assembly 20 is provided with the active-material-layer-uncoated region 102 and the positive tabs 240 at an end facing the lid assembly 11, and the active-material-layer-uncoated region 102 and the positive tabs 240 may be connected to the lid assembly 11 through corresponding adapter sheets 1112. The positive tabs 240 of the two electrode assemblies 20 are welded to each other, and the active-material-layer-uncoated regions 102 of the two electrode assemblies 20 are welded to each other. The positive tabs 240 and the active-material-layer-uncoated regions 102 of the two electrode assemblies 20 are correspondingly welded and connected to the adapter sheets 1112, after which the two electrode assemblies 20 are bent relative to each other and then inserted into the housing 10. The active-material-layer-uncoated region 102 includes a connecting portion 111 and a bending portion 112, the connecting portion 111 is fixedly connected to the adapter sheet 1112, the bending portion 112 is connected between the main body 1 and the connecting portion 111, and the reinforcing layer 130 covers at least a portion of the bending portion 112. The active-material-layer-uncoated region 102 is covered by a first adhesive tape 30, and the first adhesive tape 30 is disposed on a side of the active-material-layer-uncoated region 102 facing away from the lid assembly 11 to protect the active-material-layer-uncoated region 102. The first adhesive tape 30 includes a first adhesive region 31, a second adhesive region 33, and a non-adhesive region 32 located between the first adhesive region 31 and the second adhesive region 33. The first adhesive region 31 covers the main body 1, and the second adhesive region 33 covers the connecting portion 111. In a thickness direction of the electrode assembly, an orthographic projection of the reinforcing layer 130 is completely located within the non-adhesive region 32, so as to avoid delamination of the reinforcing layer when the tab is static or during tab assembly. The positive tabs 240 are covered by a second adhesive tape 40, and the second adhesive tape 40 is disposed on a side of the positive tabs 240 facing away from the lid assembly 11 to protect the positive tabs 240. The adhesive tape improves the safety of foil exposure, and the non-adhesive region covers the reinforcing layer to avoid delamination of the reinforcing layer, and the adhesive tape provides support to avoid inward buckling and tearing of the negative tab.

Hereinafter, the present disclosure will be explained more specifically by reference to examples, which should not be construed as limiting. Appropriate modifications may be made within the scope consistent with the gist of the present disclosure, and all such modifications fall within the technical scope of the present disclosure.

### Example 1

Preparation of the negative electrode sheet: Boehmite, polyacrylic acid, and carbon black are mixed at a mass ratio of 20:75:5, deionized water is added, and the mixture is homogenized in a vacuum mixer to obtain a reinforcing layer slurry. Artificial graphite, conductive carbon black, sodium carboxymethyl cellulose, and polyacrylic acid are mixed at a mass ratio of 97:1:1:1, deionized water is added, and the mixture is homogenized in a vacuum mixer to obtain a negative electrode slurry. The negative electrode slurry and the reinforcing layer slurry are simultaneously coated onto a copper foil having a thickness of 6 µm, transferred to an oven for drying, and then subjected to calendering, slitting, die-cutting, and sheeting to obtain a negative electrode sheet. In forming tabs, the tab extends, from a side of the active-material-layer-uncoated region away from the active material layer, into the reinforcing layer, thereby providing a transition region. The content of a first binder in the active material layer is 1%, and h/A is 6. The width of the active-material-layer-coated region is 210 mm, the width of the active-material-layer-uncoated region is 30 mm, the width of the reinforcing layer is 12 mm, the thickness of the reinforcing layer is 18 µm, and a predetermined spacing between the reinforcing layer and the active material layer is 0.6 mm. Accordingly, the ratio of the width of the active-material-layer-uncoated region to the width of the reinforcing layer is 2.5; the ratio of the width of the active-material-layer-uncoated region to the predetermined spacing is 50; the ratio of the thickness of the reinforcing layer to the thickness of the current collector is 3; the ratio of the widths of the active material layer to the active-material-layer-uncoated region is 7; and the ratio of the width at the maximum overlapping position between a reinforcing rib and the reinforcing layer to the width of the reinforcing layer is 0.5.

Preparation of the positive electrode sheet: LiNi₀₈Co_{0.1}Mn_{0.1}O₂, acetylene black, and poly(vinylidene fluoride) (PVDF) are mixed in a mass ratio of 97:1:2, followed by the addition of N-methyl-2-pyrrolidone (NMP). The mixture is agitated in a vacuum mixer until a homogeneous system is obtained, thereby yielding a positive electrode slurry. The positive electrode slurry is uniformly coated onto an aluminum foil, air-dried at room temperature, and subsequently transferred to an oven for drying. The dried laminate is then subjected to cold pressing, edge trimming, sheet cutting, and slitting to obtain a positive electrode sheet.

Preparation of the electrolyte: Ethylene carbonate, ethyl methyl carbonate, diethyl carbonate, and propylene carbonate are mixed, for example, at a volume ratio of 1:1:1:1. In a glovebox under an argon atmosphere having a water content of less than 10 ppm, thoroughly dried LiPF₆ is dissolved in the mixed organic solvent, and, after homogeneous mixing, the electrolyte is obtained, wherein the concentration of LiPF₆ is, by way of example, 1 mol/L.

Selection of separator: Polyethylene having a thickness of 9 µm is employed as the separator.

Preparation of the battery: A positive electrode sheet, a separator, and a negative electrode sheet are stacked in sequence and wound such that the separator is interposed between the positive and negative electrode sheets to provide electrical isolation. Except for the innermost and outermost turns, one tab is led out from each intermediate turn of the negative electrode sheet, thereby forming a bare wound cell. The bare cell is then inserted into an aluminum housing, a top-lid assembly is mounted, an electrolyte is injected, and the housing is hermetically sealed to obtain a lithium-ion battery.

### Example 2

The content of the first binder in the active material layer is 2%, with h/A being 3; the remaining operations are identical to those of Example 1.

### Example 3

The content of the first binder in the active material layer is 4%, with h/A being 1.5; the remaining operations are identical to those of Example 1.

### Example 4

The thickness of the current collector is 5 µm, the content of the first binder in the active material layer is 0.1%, with h/A being 50; the remaining operations are identical to those of Example 1.

### Example 5

The thickness of the reinforcing layer is 6 µm; the ratio of the thickness of the reinforcing layer to that of the current collector is 1; the remaining operations are consistent with those of Example 1.

### Example 6

The thickness of the reinforcing layer is 36 µm; the ratio of the thickness of the reinforcing layer to that of the current collector is 6; the remaining operations are consistent with those of Example 1.

### Example 7

The thickness of the current collector is 5 µm, the thickness of the reinforcing layer is 15 µm; the ratio of the thickness of the reinforcing layer to that of the current collector is 3; the remaining operations are consistent with those of Example 1.

### Example 8

The thickness of the current collector is 4.5 µm, the thickness of the reinforcing layer is 13.5 µm; the ratio of the thickness of the reinforcing layer to that of the current collector is 3; the remaining operations are consistent with those of Example 1.

### Example 9

The thickness of the current collector is 4 µm, the thickness of the reinforcing layer is 12 µm; the ratio of the thickness of the reinforcing layer to that of the current collector is 3; the remaining operations are consistent with those of Example 1.

### Example 10

The reinforcing layer has a width of 6 mm; that is, the ratio of the width of the active-material-layer-uncoated region to the width of the reinforcing layer is 5. The remaining operations are identical to those of Example 1.

### Example 11

The reinforcing layer has a width of 4 mm; that is, the ratio of the width of the active-material-layer-uncoated region to the width of the reinforcing layer is 7.5. The remaining operations are identical to those of Example 1.

### Example 12

The width of the active-material-layer-uncoated region is 40 mm, and the width of the reinforcing layer is 8 mm; that is, the ratio of the width of the active-material-layer-uncoated region to the width of the reinforcing layer is 5. The remaining operations are identical to those of Example 1.

### Example 13

The width of the active-material-layer-uncoated region is 40 mm, the predetermined spacing between the reinforcing layer and the active material layer is 0.1 mm, and the ratio of the width of the active-material-layer-uncoated region to the predetermined spacing is 400. The remaining operations are identical to those of Example 1.

### Example 14

The predetermined spacing between the reinforcing layer and the active material layer is 1.1 mm, and the ratio of the width of the active-material-layer-uncoated region to the predetermined spacing is 27.3. The remaining operations are consistent with those of Example 1.

### Comparative Example 1

The content of the first binder in the active material layer is 0.08%, with h/A equal to 75. All other operations are identical to those of Example 1.

### Comparative Example 2

The content of the first binder in the active material layer is 5%, with h/A equal to 1.2. The remaining operations are identical to those of Example 1.

### Comparative Example 3

The thickness of the reinforcing layer is 3 mm, i.e., the ratio of the thickness of the reinforcing layer to the thickness of the current collector is 0.5. The remaining operations are identical to those of Example 1.

### Comparative Example 4

The width of the reinforcing layer is 15 mm; that is, the ratio of the width of the active-material-layer-uncoated region to the width of the reinforcing layer is 2. The remaining operations are identical to those of Example 1.

### Comparative Example 5

The width of the reinforcing layer is 3.5 mm; that is, the ratio of the width of the active-material-layer-uncoated region to the width of the reinforcing layer is 8.6. The remaining operations are identical to those of Example 1.

### Comparative Example 6

The predetermined spacing between the reinforcing layer and the active material layer is 1.4 mm, and the ratio of the width of the active-material-layer-uncoated region to the predetermined spacing is 21.4. The remaining operations are consistent with those of Example 1

### Comparative Example 7

The predetermined spacing between the reinforcing layer and the active material layer is 0.05 mm, and the ratio of the width of the active-material-layer-uncoated region to the predetermined spacing is 600. The remaining operations are consistent with those of Example 1.

In an embodiment of the present disclosure, in order to determine wrinkling performance of tabs, after obtaining a bare cell, a camera is utilized to measure, for each layer, the distance from a side of the tab that is distal from the active material layer to the active material layer, and to calculate the difference from the design value of the width of the active-material-layer-uncoated region (where, if the design value is derived from a disassembled cell, for tabs at the same elevation, the maximum width of the uncoated region is adopted). The mean of the differences is then obtained and defined as the tab deviation value (if a deviation value of the active-material-layer-uncoated region is to be obtained, a camera is employed to acquire, for each layer, the distance from a side of the active-material-layer-uncoated region that is distal from the active material layer to the active material layer). The tab deviation value is employed to characterize wrinkling performance of tabs, with a smaller tab deviation value indicating fewer instances of tab wrinkling.

In an embodiment of the present disclosure, for the purpose of determining folding of tabs, after obtaining the bare cell, the orthographic projection area of each tab on the plane of the current collector is acquired by a CCD camera and denoted as S1, and the orthographic projection area of each tab, after being laid flat, on the plane of the current collector is denoted as S2. (If the folding condition of the active-material-layer-uncoated region is to be determined, the orthographic projection area of the active-material-layer-uncoated region of each layer on the plane of the current collector, and the orthographic projection area of the active-material-layer-uncoated region of each layer after being laid flat on the plane of the current collector, are acquired by a CCD camera.) The error is calculated as (S2 - S1)/S2 × 100%. A tab for which the error exceeds 5% is defined as exhibiting folding. The ratio of the number of layers in which tab folding occurs to the total number of tab layers is then calculated.

In an embodiment of the present disclosure, upon obtaining the negative electrode sheet, an inspection is conducted to determine whether the reinforcing layer and the negative electrode active material layer are integrated. An integrated state is characterized in that, within the region of the reinforcing layer, material of the negative electrode active material layer is integrated thereto. A non-integrated appearance is characterized in that the reinforcing layer and the negative electrode active material layer are completely separated, with a substantially uniform spacing therebetween.

In an embodiment of the present disclosure, after disassembling the battery cells of Examples 1-14 and Comparative Examples 1-7, the actual number of welded layers of the tabs is observed, and the ratio of the actual number of welded layers of the tabs to the designed number of tabs is calculated (where the number of welded layers in the active-material-layer-uncoated region is ascertainable, the actual number of welded layers in the active-material-layer-uncoated region and the designed number of layers are obtained).

According to an embodiment of the present disclosure, the electrode sheets of Examples 1-14 and Comparative Examples 1-7 are subjected to surface observation using an optical microscope to confirm whether the active material layer had delaminated.

In an embodiment of the present disclosure, during the coating process, upon completion of each 3000 meters of electrode sheet, the electrode sheet is subjected to a comprehensive inspection, and the total length (in meters) of coating cracks and the frequency of wrinkling are recorded. A wrinkling frequency in the electrode sheet less than or equal to 1/1000 is deemed acceptable, and a breakage frequency in the electrode sheet less than or equal to 1/1000 is deemed acceptable; if the frequency exceeds 1/1000, subsequent safety issues of the battery cell and the like may arise.

**Table 1. Some characteristics and performance of negative electrode sheets in Examples 1-4 and Comparative Examples 1-2**

| Group | Thickness of current collector h µm | Content of first binder in active material layer A% | h/A | For each 3,000 meters of coated length, the wrinkling frequency shall be less than or equal to 1/1,000 to be deemed acceptable | For each 3,000 meters of coated length, the break frequency shall be less than or equal to 1/1,000 to be deemed acceptable | Whether the active material layer detaches |
|---|---|---|---|---|---|---|
| Example 1 | 6 | 1 | 6 | 0/3000, acceptable | 0/3000, acceptable | No |
| Example 2 | 6 | 2 | 3 | 1/3000, acceptable | 1/3000, acceptable | No |
| Example 3 | 6 | 4 | 1.5 | 3/3000, acceptable | 3/3000, acceptable | No |
| Example 4 | 5 | 0.1 | 50 | 0/3000, acceptable | 0/3000, acceptable | No |
| Comparative Example 1 | 6 | 0.08 | 75 | 0/3000, acceptable | 0/3000, acceptable | Yes |
| Comparative Example 2 | 6 | 5 | 1.2 | 4/3000, unacceptable | 3/3000, acceptable | No |

As shown in Table 1, comparison of Examples 1-4 with Comparative Examples 1-2 establishes that, where the thickness of the current collector is held constant, a progressive increase in the content of the first binder within the active material correspondingly increases the frequency of wrinkling and breakage during coating. When the content of the first binder in the active material is less than or equal to 4%, the incidence of wrinkling and breakage is less than or equal to 1/1000 per 3,000 m of coating, which is acceptable for production. However, as the content of the first binder increases further, the resulting excessive frequency of wrinkling and breakage reduces production efficiency and yield. By comparing Example 4 with Comparative Example 1, although the thickness of foil is lower, no wrinkling or breakage occurs at lower contents of the first binder, indicating that the content of the first binder is the critical factor affecting wrinkling and breakage during coating. When the thickness of the copper foil decreases, wrinkling and breakage are more likely to occur, and heightened attention must be paid to the content of the first binder. Conversely, if the content of the first binder is insufficient, issues such as delamination of the active material layer arise, causing material failure of the electrode sheet and rendering battery fabrication impossible. Accordingly, the content of the first binder must be controlled with due consideration to wrinkling and breakage of the electrode sheet, as well as to the adhesion of the active material layer.

**Table 2. Some characteristics and performance of negative electrode sheets in Examples 1, 5-9 and Comparative Example 3**

| Group | Thickness of current collector h µm | Thickness of reinforcing layer H2 µm | H2/h | Tab deviation value mm | Tab folding ratio | Ratio of actual number of welded layers to tab quantity |
|---|---|---|---|---|---|---|
| Example 1 | 6 | 18 | 3 | 0.2 | <0.5% | 100% |
| Example 5 | 6 | 6 | 1 | 0.4 | 0.5%-1% | 80% |
| Example 6 | 6 | 36 | 6 | 0.1 | <0.5% | 100% |
| Example 7 | 5 | 15 | 3 | 0.2 | <0.5% | 100% |
| Example 8 | 4.5 | 13.5 | 3 | 0.4 | <0.5% | 100% |
| Example 9 | 4 | 12 | 3 | 0.5 | 0.5%-1% | 80% |
| Comparative Example 3 | 6 | 3 | 0.5 | 0.3 | 0.5-1% | 80% |

With reference to Table 2, a comparison of Examples 1 and 5-6 with Comparative Example 3 indicates that, where the thickness of the current collector is the same, as the ratio of the thickness of the reinforcing layer to the thickness of the current collector increases, the tab deviation value and the proportion of tab folding decrease. This demonstrates that increasing the thickness of the reinforcing layer may reduce tab wrinkling and folding. Moreover, as the ratio increases, the tab deviation value and the proportion of tab folding tend to stabilize. To control costs, the ratio of the thickness of the reinforcing layer to the thickness of the current collector is controlled within the range of 1 to 6. A comparison of Examples 1 and 7-9 indicates that, where the ratio of the thicknesses of the reinforcing layer and the current collector is held constant, a decrease in the thickness of the current collector results in an increase in the tab deviation value and the proportion of tab folding, while remaining generally within a relatively small range. This indicates that, as the thickness of the current collector decreases, the number of instances of tab wrinkling and folding increases, which may be ameliorated by providing the reinforcing layer. Accordingly, as the thickness of the current collector decreases, the ratio of the thickness of the reinforcing layer to that of the current collector may be increased to mitigate tab wrinkling and folding.

**Table 3. Some characteristics and performance of negative electrode sheets in Examples 1, 10-12 and Comparative Examples 4-5**

| Group | Thickness of current collector h µm | W1 mm | W2 mm | W1/ W2 | Tab deviation value mm | Tab folding ratio | Ratio of actual number of welded layers to tab quantity |
|---|---|---|---|---|---|---|---|
| Example 1 | 6 | 30 | 12 | 2.5 | 0.1 | <0.5% | 100% |
| Example 10 | 6 | 30 | 6 | 5 | 0.2 | <0.5% | 100% |
| Example 11 | 6 | 30 | 4 | 7.5 | 0.3 | <0.5% | 100% |
| Example 12 | 6 | 40 | 8 | 5 | 0.1 | <0.5% | 100% |
| Comparative Example 4 | 6 | 30 | 15 | 2 | 0.1 | <0.5% | 80% |
| Comparative Example 5 | 6 | 30 | 3.5 | 8.6 | 0.5 | >1.5% | 100% |

As shown in Table 3, a comparison of Examples 1 and 10-12 with Comparative Examples 4-5 demonstrates that, when the width of the reinforcing layer is relatively small, i.e., when W1/W2 is relatively large, the deviation of the active-material-layer-uncoated region is greater, and the proportion of folding in the active-material-layer-uncoated region is higher, indicating increased wrinkling and folding in the active-material-layer-uncoated region. As the width of the reinforcing layer gradually increases, the deviation of the active-material-layer-uncoated region progressively decreases, and the proportion of folding in the active-material-layer-uncoated region falls below 0.5%, indicating that increasing the width of the reinforcing layer may reduce wrinkling and folding in the active-material-layer-uncoated region. However, when the width of the reinforcing layer is excessively large, i.e., when W1/W2 is less than 2.5, welding the area of the active-material-layer-uncoated region designated for welding to the adapter sheet results in weld blowout, thereby causing a discrepancy between the actual number of welded layers in the active-material-layer-uncoated region and the designed number of layers in the active-material-layer-uncoated region. This may result in an increase in interfacial contact resistance, a reduction in the bonding strength between the active-material-layer-uncoated region and the electrode sheet, and, in turn, detachment or false bonding of the active-material-layer-uncoated region, or a significant local temperature rise in the cell, potentially triggering a thermal runaway chain reaction. Accordingly, by controlling W1/W2 within the range of 2.5 to 7.5, wrinkling and folding in the active-material-layer-uncoated region may be reduced while enhancing the safety performance of the cell.

**Table 4. Some characteristics and performance of negative electrode sheets in Examples 1, 13-14 and Comparative Examples 6-7**

| Group | Thickness of current collector µm | W1 mm | G mm | W1/G | Tab deviation value | Whether it is integrated with the negative electrode active material layer |
|---|---|---|---|---|---|---|
| Example 1 | 6 | 30 | 0.6 | 50 | 0.2 | No |
| Example 13 | 6 | 40 | 0.1 | 400 | 0.2 | No |
| Example 14 | 6 | 30 | 1.1 | 27.3 | 0.3 | No |
| Comparative Example 6 | 6 | 30 | 1.4 | 21.4 | 0.5 | No |
| Comparative Example 7 | 6 | 30 | 0.05 | 600 | 0.2 | Yes |

As shown in Table 4, a comparison among Examples 1 and 13-14 and Comparative Examples 6-7 demonstrates that, when the ratio of the width of the active-material-layer-uncoated region to the predetermined spacing between the reinforcing layer and the active material layer exceeds 400-i.e., when the predetermined spacing is relatively small-integration occurs between the reinforcing layer and the negative electrode active material layer. This may give rise to abnormal interfacial contact and stress concentration, and further cause a reduction in the utilization of the active material. As the predetermined spacing increases-that is, as the W1/G ratio decreases-such integration between the reinforcing layer and the negative electrode active material layer may be avoided, and the tab deviation value becomes relatively stable with decreasing W1/G. However, when the W1/G ratio is less than 22, the tab deviation value becomes relatively large, which is attributed to an excessive spacing between the reinforcing layer and the active material layer, thereby preventing the reinforcing layer from performing its reinforcing function and resulting in increased wrinkling. Accordingly, by controlling the ratio of W1/G, integration may be mitigated while wrinkling and folding of the tab are reduced, thereby enhancing the safety performance of the battery.

In summary, the present disclosure provides an electrode sheet and applications thereof. By controlling, within a prescribed range, the ratio between the thickness of the current collector and the content of the first binder in the active material layer, the content of the first binder may be reduced. By providing the reinforcing layer, the disclosure, while improving battery energy density, also prevents wrinkling, folding, and the like in active-material-layer-uncoated regions. Moreover, when the electrode sheet is assembled into a battery, because the active-material-layer-uncoated region undergoes bending, inward buckling of the active-material-layer-uncoated region into adjacent layers may be avoided, thereby preventing short circuits and related failures caused by such inward buckling. By controlling the width ratio between the active-material-layer-uncoated region and the reinforcing layer, when the width of the active-material-layer-uncoated region is relatively large, the reinforcing layer may provide better support, thereby preventing wrinkling, folding, and inward buckling of the tab. At the same time, excessive widening of the reinforcing layer that would encroach upon the tab welding region is avoided, ensuring the dimensions of the tab welding region and enhancing safety performance of the battery. By controlling the predetermined spacing, the disclosure prevents integration between the reinforcing layer and the active material layer that would otherwise cause edge bulging, while ensuring the tab welding region and reducing tab wrinkling and folding, thereby improving battery performance and mitigating safety risks. The disclosure is applicable to thinner current collectors and, in circumstances involving thin current collectors or multilayer tabs, reduces wrinkling of the current collector. By controlling the composition of the reinforcing layer, a negative electrode sheet production line need not be equipped with organic gas recovery equipment, thereby simplifying the preparation process. By controlling the grayscale value of the reinforcing layer, reflectance to laser light during laser cutting is reduced, so that, for the same cutting thickness, lower laser power may be employed, thereby decreasing laser energy consumption in die-cutting, reducing occurrences of exposed foil, improving battery energy density and cycling performance, and enhancing adhesion between the reinforcing layer and the current collector to reduce delamination of the reinforcing layer.

## Claims

1. An electrode sheet (100), comprising a current collector (110), an active material layer (120), and a reinforcing layer (130),
wherein at least one side of the current collector (110) comprises an active-material-layer-coated region (101) and an active-material-layer-uncoated region (102) adjacent to each other along a first direction (Y);
the active-material-layer-coated region (101) is coated with the active material layer (120), the reinforcing layer (130) is coated in at least portion of the active-material-layer-uncoated region (102);
**characterized in that**, the active material layer (120) comprises a first binder, a content of the first binder in the active material layer (120) is A%, a thickness (h) of the current collector (110) is h µm, satisfying 1.3≤h/A≤55.

2. The electrode sheet according to claim 1, wherein based on a total mass of the active material layer (120), the content of the first binder in the active material layer (120) is 0.1% to 4%.

3. The electrode sheet according to claim 1, wherein the active material layer (120) further comprises an active material and a conductive agent, and the first binder comprise at least one of polyacrylic acid and derivatives thereof, a polymerized styrene butadiene rubber, or carboxymethylcellulose sodium.

4. The electrode sheet according to claim 1, wherein a ratio of a thickness (H2) of the reinforcing layer (130) to the thickness (h) of the current collector (110) is 1 to 6;
the thickness (h) of the current collector (110) is 4 µm to 5.5 µm.

5. The electrode sheet according to claim 1, wherein along the first direction (Y), there is a predetermined spacing G mm between the active material layer (120) and the reinforcing layer (130), satisfying 22≤W1/G≤400.

6. The electrode sheet according to claim 1, wherein along the first direction (Y), a width (W1) of the active-material-layer-uncoated region (102) is W1 mm, a width (W2) of the reinforcing layer (130) is W2 mm, satisfying 2.5≤W1/W2≤7.5.

7. The electrode sheet according to claim 1, wherein the reinforcing layer (130) comprises ceramic particles, a second binder, and a color developer, and a mass ratio of the ceramic particles, the second binder, and the color developer is (10-20):(75-90):(0.5-5), the second binder is an aqueous binder;
the second binder comprises at least one of polyacrylic acid, polymerized styrene butadiene rubber, polyvinyl alcohol, polyacrylamide, methylcellulose and salts thereof, chitosan and salts thereof, and alginic acid and salts thereof;
the color developer comprises at least one of carbon black, chrome oxide green, cobalt green, cobalt blue, iron blue, cadmium red, carbon black, or iron oxide red.

8. The electrode sheet according to claim 7, wherein a grayscale value of the reinforcing layer (130) is 0 to 110, and the electrode sheet (100) is a negative electrode sheet.

9. A battery, comprising:
a housing (10) having an upper opening;
an electrode assembly (20) disposed in the housing (10) and a lid assembly (11) sealing the upper opening, wherein the electrode assembly (20) is formed by winding or stacking a positive electrode sheet (200), a separator (300), and a negative electrode sheet, the negative electrode sheet adopts the electrode sheet (100) according to any one of claims 1-8;
along the first direction (Y), the electrode assembly (20) comprises a main body (1) and the active-material-layer-uncoated region (102), the active-material-layer-uncoated region (102) comprises a bending portion (112) and a connecting portion (111), the connecting portion (111) is fixedly connected to the lid assembly (11), and the bending portion (112) is connected between the main body (1) and the connecting portion (111);
the reinforcing layer (130) covers at least a partial region of the bending portion (112).

10. The battery according to claim 9, wherein the electrode assembly (20) is covered with a first adhesive tape (30), the first adhesive tape (30) is disposed on a side of the active-material-layer-uncoated region (102) facing away from the lid assembly (11), the first adhesive tape (30) comprises a first adhesive region (31), a second adhesive region (33), and a non-adhesive region (32) located between the first adhesive region (31) and the second adhesive region (33), the first adhesive region (31) covers the main body (1), the second adhesive region (33) covers the connecting portion (111), in a thickness direction of the electrode assembly (20), an orthographic projection of the reinforcing layer (130) is completely located within the non-adhesive region (32).

11. An electronic device, comprising the battery according to any one of claims 9-10.
